# EUROPEAN PATENT APPLICATION

(11) **EP 3 065 486 A1**
(43) Date of publication of application: **07.09.2016**
(21) Application number: 14857519.4
(22) Date of filing: 24.04.2014
(51) Int. Cl.: H04W 72/04

(54) **METHOD, APPARATUS, AND TERMINAL FOR PROCESSING RESOURCE SHARING**

(30) Priority: 29.10.2013 CN 201310524176
(71) Applicant: ZTE Corporation, Shenzhen, Guangdong 518057 (CN)
(72) Inventor: HU, Peng, Shenzhen Guangdong 518057 (CN); WANG, Ping, Shenzhen Guangdong 518057 (CN)
(74) Representative: Mozzi, Matteo
(86) International application number: PCT/CN2014/076168
(87) International publication number: WO 2015/062223

(57) **Abstract**

The disclosure provides a method and device for processing resource sharing, and a terminal. The method includes that: resource request information is broadcast, wherein the resource request information carries resource information for identifying a requested resource and link information for receiving the resource; and the resource shared by a resource provider which has the resource is received, wherein the resource provider determines, according to the resource information, that the resource provider has the resource. By means of the embodiments of the disclosure, problems in the related art that a process is troublesome, sharing efficiency is low, and user experience is undesirable because sharing of a requested resource requires manual determination of a resource provider which has the resource are solved, thereby implementing a simple sharing process, and achieving effects of improving the sharing efficiency and the improving user experience.

## Description

### Technical Field

The disclosure relates to the communications field, and in particular to a method and device for processing resource sharing, and a terminal.

### Background

With the constant development of terminal technology and the popularization of mobile phones, mobile phone applications are emerging one after another, and there are many methods for transmitting and sharing a file on a mobile phone, such as infrared, Bluetooth, Wireless Fidelity (WiFi) hotspots and so on. These functions greatly facilitate sharing of various files and resources between terminals of users. However, these technologies and related patents substantially provide a method in which a receiver first acknowledges that a transmitter has a required resource, then a connection is established between two parties, and the transmitter shares the resource to the receiver.

For example, a mobile phone is generally provided with many methods for sharing a file in the related art, but a receiver A generally needs to first determine whether a terminal B or a terminal C is provided with the required resource, subsequently establishes a connection with a terminal, which can provide the required resource, and then transmission can be started. Such a method affects an efficiency of content sharing between the users. For example, when a user A, a user B and a user C are together, the user A wants a telephone number of their classmate Zhang San. However, the user A needs to tell the user B and the user C a person whose telephone number is required, then the user B and the user C need to check their mobile phones first to determine whether the telephone number of Zhang San is in their contact lists, and the one having the number subsequently establishes a connection with the user A to transmit the number to A. For another example, if the user A wants a song entitled XXX.mp3, the user A also needs to tell the song to the user B and the user C first, then the user B and the user C check file folders or music libraries of their mobile phones to determine whether they have the song so that the song can be shared to the user A. Therefore, the users have to request and search a resource manually, which is very inconvenient in use.

Thus, there are problems that a process is troublesome, sharing efficiency is low, and user experience is undesirable because sharing of a requested resource requires manual determination of a resource provider which has the resource in the related art.

### Summary

The embodiments of disclosure provides a method and device for processing resource sharing and a terminal so as to at least solve problems that a process is troublesome, sharing efficiency is low, and user experience is undesirable because sharing of a requested resource requires manual determination of a resource provider which has the resource in the related art.

A method for processing resource sharing is provided according to an aspect of the embodiments of the disclosure, including that: broadcasting resource request information, wherein the resource request information carries resource information for identifying a requested resource and link information for receiving the resource; and receiving the resource shared by a resource provider which has the resource, wherein the resource provider determines, according to the resource information, that that the resource provider has the resource.

In an example embodiment, broadcasting the resource request information includes: modulating and coding the resource information and the link information into an acoustic signal; and broadcasting the acoustic signal.

In an example embodiment, before receiving the resource shared by the resource provider which has the resource, the method further includes: receiving resource prompt information transmitted by the resource provider; judging, according to the resource prompt information, whether to receive the resource shared by the resource provider; and receiving the resource provided by the resource provider when it is judged to receive the resource shared by the resource provider.

A method for processing resource sharing is provided according to another aspect of the embodiments of the disclosure, including that: receiving resource request information broadcast by a resource requester, wherein the resource request information caries resource information for identifying a requested resource, and link information for receiving the resource; determining, according to the resource information, that the resource exists; and sharing the resource to the resource requester according to the link information.

In an example embodiment, in a case that the resource request information broadcast by the resource requester is received through an acoustic signal, determining, according to the resource information, that the resource provider has the resource, and sharing the resource to the resource requester according to the link information includes: parsing the resource information and the link information from the acoustic signal; searching for the resource according to the resource information; and sharing the found resource to the resource requester through a Wireless Local Area Network, WLAN, hotspot corresponding to the link information, wherein the link information includes a Service Set Identifier, SSID, of the WLAN hotspot.

In an example embodiment, before sharing the found resource to the resource requester through the WLAN hotspot corresponding to the link information, the method further includes: transmitting resource prompt information to the resource requester, wherein the resource prompt information is used for prompting the resource requester to decide whether to receive the resource.

A device for processing resource sharing is provided according to still another aspect of the embodiments of the disclosure, including: a broadcasting component, configured to broadcast resource request information, wherein the resource request information carries resource information for identifying a requested resource and link information for receiving the resource; and a first receiving component, configured to receive the resource shared by a resource provider which has the resource, wherein the resource provider determines, according to the resource information, that the resource provider has the resource.

In an example embodiment, the broadcasting component includes: a coding element, configured to modulate and code the resource information and the link information into an acoustic signal; and a broadcasting element, configured to broadcast the acoustic signal.

In an example embodiment, the device further includes: a second receiving component, configured to receive resource prompt information transmitted by the resource provider; a judging component configured to judge, according to the resource prompt information, whether to receive the resource shared by the resource provider; and the first receiving component is further configured to receive, when a judging result of the judging component is to receive the resource shared by the resource provider, the resource provided by the resource provider.

A device for processing resource sharing is provided according to still another aspect of the embodiments of the disclosure, including: a third receiving component, configured to receive resource request information broadcast by a resource requester, wherein the resource request information caries resource information for identifying a requested resource, and link information for receiving the resource; a determining component configured to determine, according to the resource information, that the resource exists; and a sharing component, configured to share the resource to the resource requester according to the link information.

In an example embodiment, the determining component includes: a parsing element and a searching element, wherein the parsing element is configured to, in a case that the resource request information broadcast by the resource requester is received through an acoustic signal, parse the resource information and the link information from the acoustic signal; and the searching element is configured to search for the resource according to the resource information; and the sharing component includes a sharing element, which is configured to share the found resource to the resource requester through a Wireless Local Area Network, WLAN, hotspot corresponding to the link information, wherein the link information includes a Service Set Identifier, SSID, of the WLAN hotspot.

In an example embodiment, the device further includes: a transmitting component, configured to transmit resource prompt information to the resource requester, wherein the resource prompt information is used for prompting the resource requester to decide whether to receive the resource.

A terminal is provided according to still another aspect of the embodiments of the disclosure, including at least one of the devices of all aspects above.

By means of the embodiments of the disclosure, resource request information is broadcast, wherein the resource request information carries resource information for identifying a requested resource and link information for receiving the resource; and the resource shared by a resource provider which has the resource is received, wherein the resource provider determines, according to the resource information, that the resource exists, thus problems in the related art that the process is troublesome, the sharing efficiency is low, and the user experience is undesirable because sharing of the requested resource requires the manual determination of the resource provider which has the resource are solved, thereby implementing a simple sharing process, and achieving effects of improving the sharing efficiency and improving the user experience.

### Brief Description of Drawings

The accompanying drawings described herein are used for providing further understanding to the disclosure and form a part of the present application. The schematic embodiments of the disclosure and description thereof are used for explaining the disclosure, but not limited to form improper limitation to the disclosure. In the drawings:
Fig. 1 is a flowchart of a first method for processing resource sharing according to an embodiment of the disclosure;
Fig. 2 is a flowchart of a second method for processing resource sharing according to an embodiment of the disclosure;
Fig. 3 is a structural block diagram of a first device for processing resource sharing according to an embodiment of the disclosure;
Fig. 4 is a structural block diagram of a broadcasting component 32 in the first device for processing resource sharing according to an example embodiment of the disclosure;
Fig. 5 is a structural block diagram of the first device for processing resource sharing according to an example embodiment of the disclosure;
Fig. 6 is a structural block diagram of a second device for processing resource sharing according to an embodiment of the disclosure;
Fig. 7 is a structural block diagram of a sharing component 66 in the second device for processing resource sharing according to an example embodiment of the disclosure;
Fig. 8 is a structural block diagram of the second device for processing resource sharing according to an example embodiment of the disclosure;
Fig. 9 is a structural block diagram of a terminal according to an embodiment of the disclosure;
Fig. 10 is a structural schematic diagram of requesting for resource sharing through an acoustic wave according to an example embodiment of the disclosure; and
Fig. 11 is a flowchart of requesting for resource sharing by an acoustic wave according to an example embodiment of the disclosure.

### Detailed Description

The disclosure will be expounded hereinafter with reference to the accompanying drawings and in combination with the embodiments. It needs to be noted that the embodiments in the present application and the characteristics in the embodiments may be combined with each other if there is no conflict.

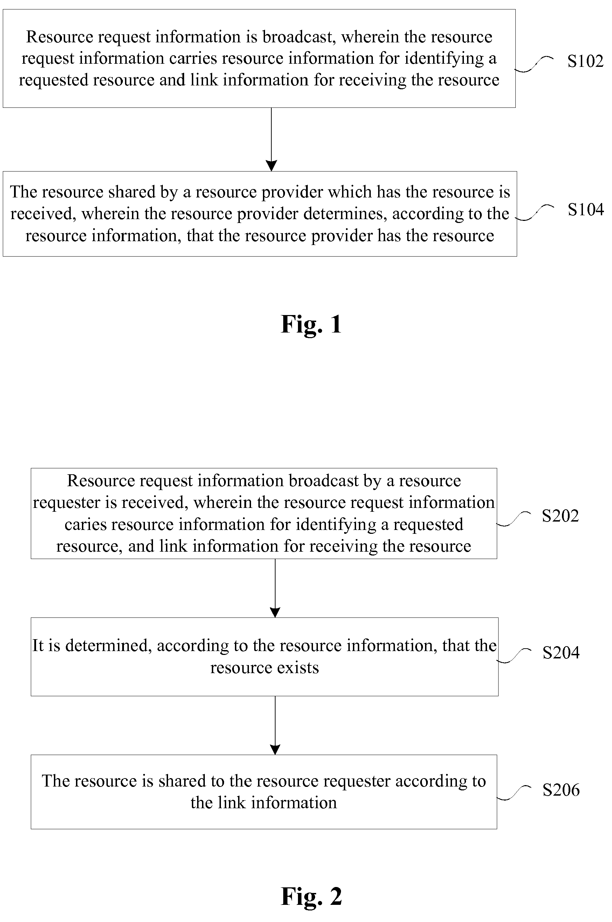

A method for processing resource sharing is provided in the present embodiment. Fig. 1 is a flowchart of a first method for processing resource sharing according to an embodiment of the disclosure. As shown in Fig. 1, the flow includes the following steps.
Step S102: Resource request information is broadcast, wherein the resource request information carries resource information for identifying a requested resource and link information for receiving the resource.
Step S104: The resource shared by a resource provider which has the resource is received, wherein the resource provider determines, according to the resource information, that the resource provider has the resource.

By means of the steps above, the resource is shared by broadcasting resource request information at a resource requester side. Compared with a troublesome process, low sharing efficiency, and undesirable user experience in the related art, because sharing of the requested resource requires manual determination of the resource provider which has the resource, the resource provider which has the resource shares the resource to the resource requester directly by means of broadcasting, thereby implementing a simple sharing process, and achieving effects of improving the sharing efficiency and improving the user experience.

The resource request information may be broadcasted by applying many processing methods. For example, the resource request information may be broadcast by an acoustic wave. That is, the resource information and the link information are modulated and coded into an acoustic signal; and the acoustic signal is broadcast. The resource request information may be transmitted to at least one terminals within a preset range through the acoustic wave. The preset range, which is exactly suitable for short distance sharing, is neither too long, nor too short, thus avoiding a bad sharing effect due to an excessively long distance, and few sharing choices of the resource provider due to an excessively short distance. Besides, the acoustic signal further has advantages of high spreading rate and large bearing capacity.

In an example embodiment, when the resource shared by the resource provider which has the resource is received, requested resources provided by a plurality of resource providers may be received. In this case, the resource requester may select the shared resources as required. In other words, resource prompt information transmitted by the resource providers may be received before receiving the shared resources, whether a resource shared by each resource provider is received is judged according to the resource prompt information, and the resource shared by the resource provider is received only when a judging result is to receive the resource shared by the resource provider. By such processing, the resource requester can specifically select a desired requested resource to be received, and the requested resources are effectively filtered to a certain degree.

A method for processing resource sharing is also provided in the present embodiment. Fig. 2 is a flowchart of a second method for processing resource sharing according to an embodiment of the disclosure. As shown in Fig. 2, the method includes the following steps.
Step S202: Resource request information broadcast by a resource requester is received, wherein the resource request information caries resource information for identifying a requested resource, and link information for receiving the resource.
Step S204: It is determined, according to the resource information, that the resource exists.
Step S206: The resource is shared to the resource requester according to the link information.

By means of the steps above, in the resource provider side, the resource provider receives the resource request information broadcast by the resource requester, so as to share the resource requested by the resource requester to the resource requester. Compared with a troublesome process, low sharing efficiency, and undesirable user experience in the related art because it is necessary to interact manually with the resource requester to determine a supply-demand relationship, the resource is shared by means of broadcasting, and the resource provider which has the resource shares the resource to the resource requester directly, thereby implementing a simple sharing process, and achieving effects of improving the sharing efficiency and improving the user experience.

In an example embodiment, in a case that the resource request information broadcast by the resource requester is received by an acoustic signal, that it is determined, according to the resource information, that the resource exists, and the resource is shared to the resource requester according to the link information may also apply many methods. For example, an implementation method using an acoustic wave and a WLAN hotspot is introduced here. In other words, a resource request of the resource requester is received through the way of the acoustic signal, and then the requested resource is shared by the WLAN hotspot, including the following processing: the resource information and the link information are parsed from the acoustic signal; the resource is searched (i.e. after it is determined that the resource exists) according to the resource information; and then the found resource is shared to the resource requester through the WLAN hotspot corresponding to the link information, wherein the link information includes an SSID of the WLAN hotspot.

Accordingly, in order to ensure that the resource shared to the resource requester is a resource truly needed by the resource requester, before the found resource searched according to the resource information is shared to the resource requester through the WLAN hotspot corresponding to the link information, the method further includes that: resource prompt information is transmitted to the resource requester, wherein the resource prompt information is used for prompting the resource requester to decide whether to receive the resource.

A device for processing resource sharing is further provided in the present embodiment. The device is applied to implementing the aforementioned embodiments and example embodiments, and what has been described will not be repeated. As used below, the term "component" may implement a combination of software and/or hardware having a preset function. Although the device described in the following embodiment is preferably implemented by software, implementation using hardware or a combination of software and hardware is also possible and conceivable.

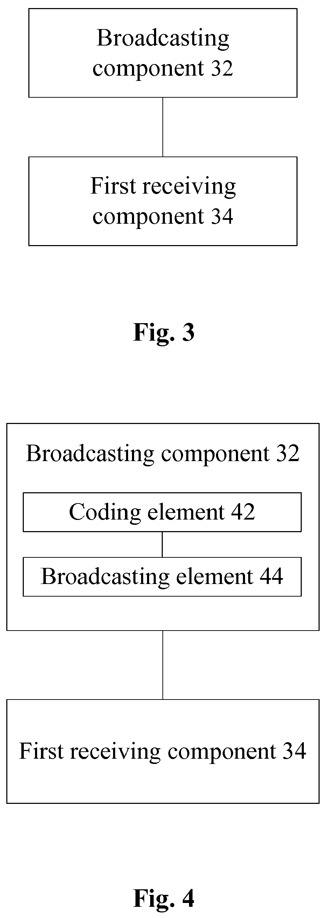

Fig. 3 is a structural block diagram of a first device for processing resource sharing according to an embodiment of the disclosure. As shown in Fig. 3, the device includes a broadcasting component 32 and a first receiving component 34. The device will be described below.

The broadcasting component 32 is configured to broadcast resource request information, wherein the resource request information carries resource information for identifying a requested resource and link information for receiving the resource; and the first receiving component 34 is connected with the broadcasting component 32 and configured to receive the resource shared by a resource provider which has the resource, wherein the resource provider determines, according to the resource information, that the resource provider has the resource.

Fig. 4 is a structural block diagram of the broadcasting component 32 in the first device for processing resource sharing according to an example embodiment of the disclosure. As shown in Fig. 4, the broadcasting component 32 includes a coding element 42 and a broadcasting element 44. The broadcasting component 32 will be described below.

The coding element 42 is configured to modulate and code the resource information and the link information into an acoustic signal; and the broadcasting element 44 is connected with the coding element 42 and configured to broadcast the acoustic signal.

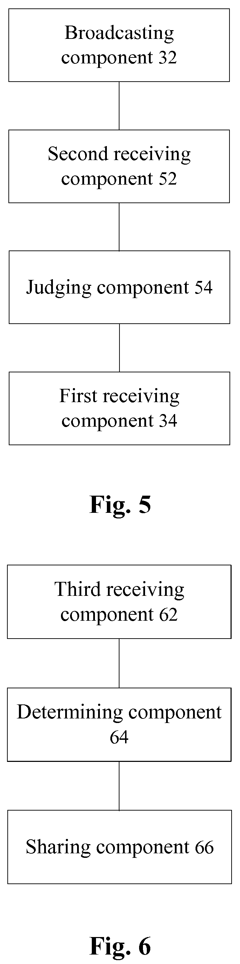

Fig. 5 is a structural block diagram of the first device for processing resource sharing according to an example embodiment of the disclosure. As shown in Fig. 5, besides all components as shown in Fig. 3, the device further includes: a second receiving component 52 and a judging component 54. The example structure will be described below.

The second receiving component 52 is connected with the broadcasting component 32 and configured to receive resource prompt information transmitted by the resource provider; the judging component 54 is connected with the second receiving component 52 and the first receiving component 34 and configured to judge, according to the resource prompt information, whether to receive the resource shared by the resource provider; and the first receiving component 34 is further configured to receive, if a judging result of the judging component 54 is to receive the resource shared by the resource provider, the resource provided by the resource provider.

Fig. 6 is a structural block diagram of a second device for processing resource sharing according to an embodiment of the disclosure. As shown in Fig. 6, the device includes a third receiving component 62, a determining component 64 and a sharing component 66. The device will be described below.

The third receiving component 62 is configured to receive resource request information broadcast from a resource requester, wherein the resource request information caries resource information for identifying a requested resource, and link information for receiving the resource; the determining component 64 is connected with the third receiving component 62 and configured to determine, according to the resource information, that the resource exists; and the sharing component 66 is connected with the determining component 64 and configured to share, according to the link information, the resource to the resource requester.

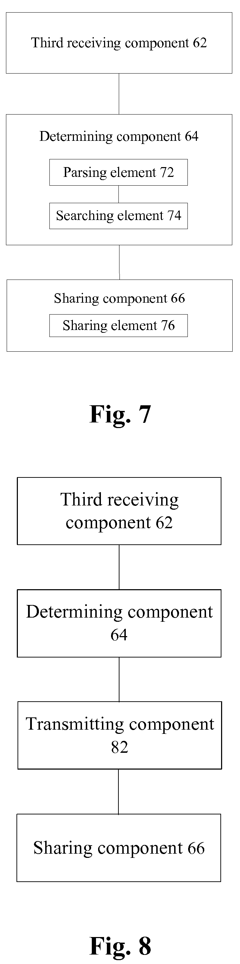

Fig. 7 is a structural block diagram of the determining component 64 and the sharing component 66 in the second device for processing resource sharing according to an example embodiment of the disclosure. As shown in Fig. 7, the determining component 64 includes a parsing element 72 and a searching element 74. The sharing component 66 includes a sharing element 76. The determining component 64 and the sharing component 66 will be described below.

The determining component 64 includes the parsing element 72 and the searching element 74, wherein the parsing element 72 is configured to, in a case that the resource request information broadcast by the resource requester is received through a way of an acoustic signal, parse the resource information and the link information from the acoustic signal; and the searching element 74 is configured to search the resource according to the resource information; and the sharing component 66 includes the sharing element 76 configured to share the found resource to the resource requester through a WLAN hotspot corresponding to the link information, wherein the link information includes an SSID of the WLAN hotspot.

Fig. 8 is a structural block diagram of the second device for processing resource sharing according to an example embodiment of the disclosure. As shown in Fig. 8, besides all components as shown in Fig. 6, the device further includes a transmitting component 82. The transmitting component 82 will be described below.

The transmitting component 82 is connected with the determining component 64 and the sharing component 66 and configured to transmit resource prompt information to the resource requester, wherein the resource prompt information is used for prompting the resource requester to decide whether to receive the resource.

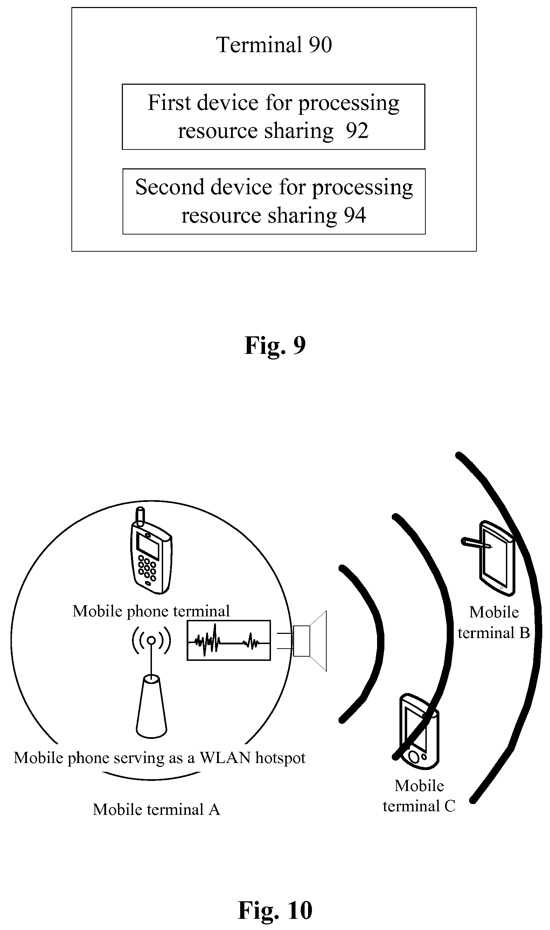

Fig. 9 is a structural block diagram of a terminal according to an embodiment of the disclosure. As shown in Fig. 9, the terminal includes the first device for processing resource sharing 92 and/or the second device for processing resource sharing 94.

To solve problems that a process is troublesome, sharing efficiency is low, and user experience is undesirable because sharing of a requested resource requires manual determination of a resource provider which has the resource in the related art, in the present embodiment, the receiver transmits requested resource information (e.g. a name, a type, or an identifier and so on) to a group, and a plurality of terminals receiving the requested information judges whether they have the resource required by the receiver and agree to share the resource, and then share the resource to the receiver. For example, the resource information requested by the receiver is broadcast by using a character that information may be spread to a plurality of persons simultaneously by such a medium as an acoustic wave, and the plurality of terminals that receive a sound may extract the requested information therein, and after judging that they have the corresponding resource, create connections with the receiver, so as to share the resource to the receiver.

Example embodiments of the disclosure will be described below with reference to the accompanying drawings.

A method of using an acoustic wave to broadcast information requested by a receiver, then extracting, by a transmitter, effective information in the acoustic wave, and directly sharing a required resource to the receiver is provided in the present embodiment. Fig. 10 is a structural schematic diagram of requesting for resource sharing through an acoustic wave according to an example embodiment of the disclosure. As shown in Fig. 10, the structure includes: a terminal A having a sound producing function and functioning as a WLAN hotspot, and other terminals (such as terminal B and terminal C) having sound acquisition and WLAN hotspot connection functions.

The terminal A modulates requested resource information (e.g. a name, a type, or an identifier and so on) and information of an SSID of an established WLAN hotspot and so on into an acoustic signal, and broadcasts the acoustic signal through a sound production device (such as a loudspeaker). After acquiring a sound, the terminals (such as terminal B and terminal C) in a range, in which an acoustic wave can be received, parse the resource information requested by the terminal A and the information including the SSID of the WLAN hotspot and so on, then search whether they have a corresponding resource in databases of the terminals, and if yes, prompt users whether to share the resource to the terminal A, and if the user agrees, automatically connect the WLAN hotspot to transmit the resource (which may further include a thumbnail or summary information of the resource) to the terminal A. After receiving a prompt indicating that the resource is shared, the terminal A may select whether to receive the resource or not.

The terminal A, which is a requester of resource sharing, and also an initiator of a whole functional flow, completes several operations. A first operation includes that a WLAN hotspot, that may be connected and used for receiving the shared resource, is created, a second operation includes that the requested resource information and the information including the SSID of the WLAN hotspot and so on are modulated and coded into the acoustic signal, and a third operation includes that the acoustic signal is played and broadcast to at least one terminal nearby. Therefore, the terminal A should include processing of the WLAN, acoustic wave coding and acoustic wave output.

The terminals B, and C and so on in the range in which the acoustic wave can be received, are providers of resource sharing, and also receivers of acoustic information. Operations executed by the terminals B and C include a first operation that effective information (the resource information requested by the terminal A and the information including the SSID of the WLAN hotspot and so on) carried the acoustic wave is parsed from the acoustic wave, a second operation that a matched resource is searched in the databases by using the information and a third operation that the matched resource is shared to the terminal A by means of connecting the WLAN hotspot. Thus, the terminal B should execute processing including acoustic wave acquisition, acoustic wave parsing, and processing of the WLAN and so on.

For example, in such an scenario in which the terminal A requests the terminals B and C and so on nearby for a telephone number of Zhang San, the terminal A only needs to broadcast such information as the name of Zhang San, and a name card, and information of an SSID of a WLAN hotspot and so on through an acoustic wave. Devices of the terminals B and C that receive the acoustic wave may perform automatic search, to transmit name cards of Zhang San in contact databases to the terminal A, and the terminal A may choose to receive the name cards.

A method of broadcasting, by a receiver, a resource sharing request through an acoustic wave is applied in the present embodiment. By means of the method, the inconvenience that a terminal nearby having a certain shared resource needs to be determined manually when such a user needs such a resource is solved, and the user may rapidly acquire the desired resource by using a real time performance and a character that broadcast may be simultaneously performed to a plurality of persons of an acoustic wave, thereby improving user experience and having broad application prospect. Besides, it is only necessary to make a slight change to a mobile terminal in processing to the terminal instead of needing to make massive software and hardware changes, so as to implement an expected effect.

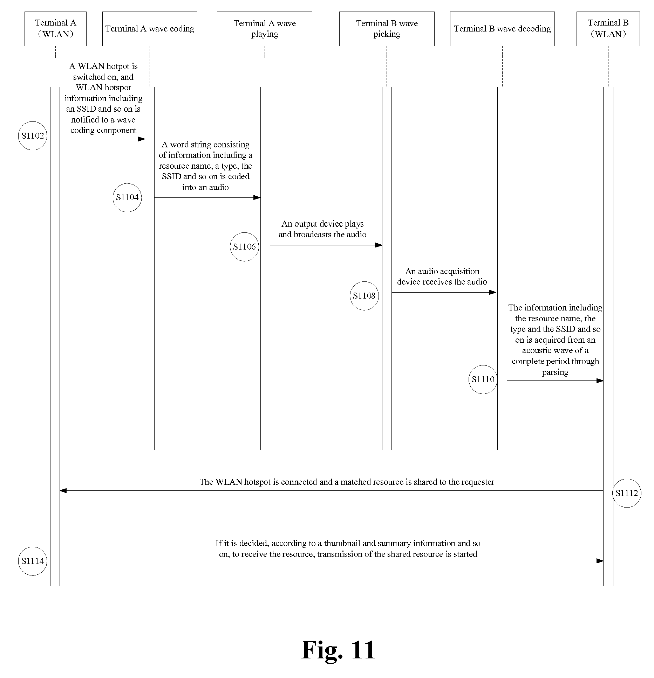

Fig. 11 is a flowchart of requesting for resource sharing by an acoustic wave according to an example embodiment of the disclosure. As shown in Fig. 11, a situation where a terminal A requests a terminal B in an acoustic wave receiving range for resource sharing is illustrated here so as to simplify description. In principle, there may be a plurality of terminals in the acoustic wave receiving range to respond to the request of the terminal A. The flow includes the following steps.
Step S1102: The terminal A creates a WLAN, i.e. creates a WLAN hotspot that can receive a shared resource.
Step S1104: The terminal A performs wave coding, codes a word string of information including a name of the resource requested by a user and a type of the resource requested by the user and so on, and information including an SSID of the WLAN and so on into an audio with a variable frequency.
Step S1106: An acoustic wave output device (a wave player) of the terminal A broadcasts the audio, and may broadcast the audio cyclically during the broadcasting process, and may stop the broadcasting if not necessary. Such a sharing request is effectively only during the broadcasting.
Step S1108: The terminal B, which is near the terminal A, may receive an acoustic wave transmitted by the terminal A. The terminal B performs wave picking to acquire the acoustic wave transmitted by the terminal A.
Step S1110: The terminal B performs wave decoding, and detects high and low frequencies in the acoustic wave of a complete period to acquire contents including information of the requested resource, the SSID and so on contained therein, and then searches whether the resource required by the request is in a database.
Step S 1112: If the resource required by the request is in a database and the user agrees to share the resource, the terminal B may automatically connect the hotspot of the terminal A according to the information including the SSID and so on through the WLAN, so as to share the found resource to the terminal A.
Step S 1114: The terminal A decides whether to receive the resource according to a transmitted resource thumbnail and summary information and so on, and if yes, transmission is started.

Obviously, those skilled in the art should understand that, each component or each step of the disclosure may be implemented by a universal computing device. They may be concentrated on a single computing device or distributed on a network composed of a plurality of computing devices. Optionally, they may be implemented by program codes executable by a computing device so that they may be stored in a storing device and executed by the computing device, and in some cases, they the steps as illustrated or described may be executed by sequences different from those described herein, or they may be implemented by respectively fabricating them into each integrated circuit component, or by fabricating a plurality of components or steps of them into a single integrated circuit component. In this way, the disclosure is not limited to any specific combination of software and hardware.

The above are only example embodiments of the disclosure, and are not used for limiting the invention. For those skilled in the art, the disclosure may have various alterations and variations. Any modification, equivalent replacement, improvement and so on can be made without departing from the scope of protection of the disclosure as defined in the appended claims.

### Industrial Applicability

As described above, a method and device for processing resource sharing, and a terminal according to the embodiments of the disclosure may have the following effect: problems that a process is troublesome, sharing efficiency is low, and user experience is undesirable because sharing of a requested resource requires manual determination of a resource provider which has the resource in the related art are solved, thereby implementing a simple sharing process, and achieving effects of improving the sharing efficiency and improving the user experience.

## Claims

1. A method for processing resource sharing, comprising:
broadcasting resource request information, wherein the resource request information carries resource information for identifying a requested resource and link information for receiving the resource; and
receiving the resource shared by a resource provider which has the resource, wherein the resource provider determines, according to the resource information, that that the resource provider has the resource.

2. The method as claimed in claim 1, wherein broadcasting the resource request information comprises:
modulating and coding the resource information and the link information into an acoustic signal; and
broadcasting the acoustic signal.

3. The method as claimed in claim 1, wherein before receiving the resource shared by the resource provider which has the resource, the method further comprises:
receiving resource prompt information transmitted by the resource provider;
judging, according to the resource prompt information, whether to receive the resource shared by the resource provider; and
receiving the resource provided by the resource provider when it is judged to receive the resource shared by the resource provider.

4. A method for processing resource sharing, comprising:
receiving resource request information broadcast by a resource requester, wherein the resource request information caries resource information for identifying a requested resource, and link information for receiving the resource;
determining, according to the resource information, that the resource exists; and
sharing the resource to the resource requester according to the link information.

5. The method as claimed in claim 4, wherein in a case that the resource request information broadcast by the resource requester is received through an acoustic signal, determining, according to the resource information, that the resource provider has the resource, and sharing the resource to the resource requester according to the link information comprises:
parsing the resource information and the link information from the acoustic signal;
searching for the resource according to the resource information; and
sharing the found resource to the resource requester through a Wireless Local Area Network, WLAN, hotspot corresponding to the link information, wherein the link information comprises a Service Set Identifier, SSID, of the WLAN hotspot.

6. The method as claimed in claim 4, wherein before sharing the found resource to the resource requester through the WLAN hotspot corresponding to the link information, the method further comprises:
transmitting resource prompt information to the resource requester, wherein the resource prompt information is used for prompting the resource requester to decide whether to receive the resource.

7. A device for processing resource sharing, comprising:
a broadcasting component, configured to broadcast resource request information, wherein the resource request information carries resource information for identifying a requested resource and link information for receiving the resource; and
a first receiving component, configured to receive the resource shared by a resource provider which has the resource, wherein the resource provider determines, according to the resource information, that the resource provider has the resource.

8. The device as claimed in claim 7, wherein the broadcasting component comprises:
a coding element, configured to modulate and code the resource information and the link information into an acoustic signal; and
a broadcasting element, configured to broadcast the acoustic signal.

9. The device as claimed in claim 7, wherein the device further comprises:
a second receiving component, configured to receive resource prompt information transmitted by the resource provider;
a judging component configured to judge, according to the resource prompt information, whether to receive the resource shared by the resource provider; and
the first receiving component is further configured to receive, when a judging result of the judging component is to receive the resource shared by the resource provider, the resource provided by the resource provider.

10. A device for processing resource sharing, comprising:
a third receiving component, configured to receive resource request information broadcast by a resource requester, wherein the resource request information caries resource information for identifying a requested resource, and link information for receiving the resource;
a determining component configured to determine, according to the resource information, that the resource exists; and
a sharing component, configured to share the resource to the resource requester according to the link information.

11. The device as claimed in claim 10, wherein
the determining component comprises: a parsing element and a searching element, wherein the parsing element is configured to, in a case that the resource request information broadcast by the resource requester is received through an acoustic signal, parse the resource information and the link information from the acoustic signal; and the searching element is configured to search for the resource according to the resource information; and
the sharing component comprises a sharing element, which is configured to share the found resource to the resource requester through a Wireless Local Area Network, WLAN, hotspot corresponding to the link information, wherein the link information comprises a Service Set Identifier, SSID, of the WLAN hotspot.

12. The device as claimed in claim 10, wherein the device further comprises:
a transmitting component, configured to transmit resource prompt information to the resource requester, wherein the resource prompt information is used for prompting the resource requester to decide whether to receive the resource.

13. A terminal, comprising the device as claimed in any one of claims 7 to 9, and/or the device as claimed in any one of claims 10 to 12.
